# EUROPEAN PATENT SPECIFICATION

(11) **EP 3 206 344 B1**
(45) Date of publication and mention of the grant of the patent: **03.06.2020**
(21) Application number: 17000212.5
(22) Date of filing: 10.02.2017
(51) Int. Cl.: H04L 12/26, H04L 29/08, H04L 12/70

(54) **PACKET BROKER**
PAKETMAKLER
COURTIER DE PAQUET

(30) Priority: 12.02.2016 IN 201641005019; 08.07.2016 US 201615205889
(43) Date of publication of application: 16.08.2017
(73) Proprietor: Extreme Networks, Inc., San Jose, CA 95119 (US)
(72) Inventor: Hegde, Deepak, San Jose, CA 95134 (US); Sharma, Shailender, San Jose, CA 95134 (US); Varimalla, Rakesh, San Jose, CA 95134 (US); Pragash, Vedam Jude, San Jose, CA 95134 (US); Dasgupta, Shubharanjan, San Jose, CA 95134 (US)
(74) Representative: Cross, James Peter Archibald

(56) References cited:
- US-A1- 2015 215 841
- US-A1- 2015 319 070
- US-B1- 8 248 928

## Description

### BACKGROUND

As known in the field of computer networking, a visibility network (sometimes referred to as a visibility fabric) is a type of network that facilitates the monitoring and analysis of traffic flowing through another network (referred to herein as a "core" network). The purposes of deploying a visibility network are varied and can include management/optimization of the core network, security monitoring of the core network, business intelligence/reporting, compliance validation, and so on.

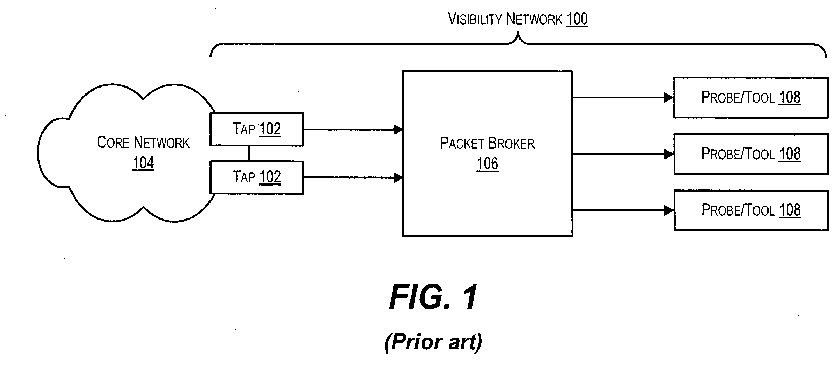

FIG. 1 depicts an example visibility network 100 according to an embodiment. As shown, visibility network 100 includes a number of taps 102 that are deployed within a core network 104. Taps 102 are configured to replicate data and control traffic that is exchanged between network elements in core network 104 and forward the replicated traffic to a packet broker 106 (note that, in addition to or in lieu of taps 102, one or more routers or switches in core network 104 can be tasked to replicate and forward data/control traffic to packet broker 106 using their respective SPAN or mirror functions). Packet broker 106 can perform various packet processing functions on the traffic received from taps 102, such as removing protocol headers, filtering/classifying packets based on configured rules, and so on. Packet broker 106 can then transmit the processed traffic to a number of analytic probes/tools 108, which can carry out various types of calculations and analyses on the traffic in accordance with the business goals/purposes of visibility network 100 (e.g., calculation of key performance indicators (KPIs), detection of security threats/attacks in core network 104, generation of reports, etc.).

Generally speaking, existing visibility network implementations use dedicated networking hardware (e.g., hardware comprising custom application-specific integrated circuits (ASICs) and/or field-programmable gate arrays (FPGAs)) in order to implement packet broker 106. For instance, according to one known approach, packet broker 106 can be implemented using a network router comprising a number of line cards, where each line card includes an ASIC or FPGA-based packet processor. When the router receives replicated traffic from taps 102, the router processes the traffic using the packet processors based on rules that are programmed into hardware memory tables (e.g., content-addressable memory (CAM) tables) resident on the packet processors and/or line cards. The router then forwards the processed traffic onward to probes/tools 108 for analysis.

While this hardware-based approach for implementing packet broker 106 has certain benefits (e.g., it can process traffic with minimal latency and jitter), it also suffers from several drawbacks. First, the scalability of visibility network 100-in other words, its ability to process increasing volumes of traffic from core network 104-is necessarily constrained by the hardware capabilities of packet broker 106. For example, if packet broker 106 is implemented using a chassis-based router that supports up to X line cards, packet broker 106 cannot scale to support traffic volumes that exceed the capabilities of those X line cards. If such scaling is required, the entire router must be replaced with another router that supports more, or higher capability, line card hardware.

Second, since hardware-based packet brokers perform packet processing based on rules that are programmed into hardware memory tables, these packet brokers are generally limited to executing packet processing operations that conform to the semantics of such rules (i.e., attempt to match one or more header fields of an incoming packet and then perform a specified action if a match is made). While these operations can be chained by passing the output of one packet processor/line card to another, the order of the chaining is fixed in hardware. This rigid processing paradigm is problematic if more flexible, complex, and dynamic packet processing operations are desired.

Third, implementing feature changes or additions to a hardware-based packet broker can be costly and time-consuming due to the need to design and validate such changes at the hardware level. This, in turn, makes it more difficult to quickly iterate the packet broker in response to evolving customer needs/requirements and increases the cost of the device for those customers.

US 2015/215841 A1 (Ivy Pei-Shan Hsu et al.) discloses that a GTP correlation cluster (GCC) can automatically program a network element to forward copies of packets originating from a mobile device and having a shared attribute to the same analytic server, regardless of the regions into which the mobile device moves. The GCC can monitor attributes of copies of control packets that the network element receives. In response to detecting a changed attribute within a control packet originating from a mobile device, the GCC can update a session map specific to that mobile device in order to cause packets having that changed attribute to be forwarded to the same port to which packets having the former attribute were being forwarded prior to the change. As a result, the network element can ensure that packets belonging to a particular session still are forwarded to the same analytic server even if the mobile device has moved to a different region.

US 8 248 928 B1 relates to load-balancing across multiple monitoring servers. A network monitoring device is described including an ingress port for receiving mirrored network packets, and a number of egress ports, used to forward the mirrored network packets to monitoring servers. A packet classifier, coupled to the ingress port, examines the mirrored network packets, and determines which of the monitoring servers should receive the packets.

US 2015/319070 A1 describes visibility filters in a plurality of visibility network infrastructure elements to efficiently implement redundancy from a centralized filter control module.

### SUMMARY

Aspects of the present invention are defined by the accompanying claims.

### BRIEF DESCRIPTION OF DRAWINGS

FIG. 1 depicts an example visibility network.
FIG. 2 depicts a visibility network comprising a software-based packet broker according to an embodiment.
FIGS. 3A and 3B depicts workflows that can be executed by the software-based packet broker of FIG. 2 for processing control and data traffic replicated from a core network according to an embodiment.
FIG. 4 is a simplified block diagram of the hardware architecture of a basic packet broker according to an embodiment.
FIG. 5 is a simplified block diagram of the software architecture of a session director node according to an embodiment.
FIG. 6 is a simplified block diagram of a traffic deduplication process according to an embodiment.
FIG. 7 depicts a workflow for the traffic deduplication process of FIG. 6 according to an embodiment.
FIG. 8 depicts a network switch/router according to an embodiment.
FIG. 9 depicts a computer system according to an embodiment.

### DETAILED DESCRIPTION

In the following description, for purposes of explanation, numerous examples and details are set forth in order to provide an understanding of various embodiments. It will be evident, however, to one skilled in the art that certain embodiments can be practiced without some of these details, or can be practiced with modifications or equivalents thereof.

### 1. Overview

Embodiments of the present disclosure provide techniques for implementing a software-based packet broker in a visibility network. In various embodiments, this software-based packet broker comprises two components: (1) a basic packet broker, or "BPB," which may be a hardware (i.e., ASIC/FPGA-based) network switch or router, and (2) a cluster of one or more general purpose computer systems, referred to herein as a "session director" cluster.

At a high level, the BPB can receive data and control traffic that is replicated from a core network and can forward the data traffic in a load balanced manner to the systems, or "nodes," in the session director cluster (note that control traffic can be forwarded to all nodes, which is explained below). In response, the session director nodes can perform, in software, packet processing operations on the received traffic, determine egress ports of the BPB on which the traffic should be sent out, tag the traffic with this egress port information, and then send the tagged traffic back to the BPB. Finally, the BPB can forward the traffic out of its appropriate egress ports (per the tags added by the session director nodes) towards one or more analytic probes/tools.

With the general architecture described above, a number of advantages can be realized over conventional hardware-based packet broker solutions. First, since most of the packet processing functions of the packet broker are performed in a distributed and load balanced manner across the nodes of the session director cluster, the software-based packet broker of the present disclosure can be easily scaled as the volume of data traffic generated by the core network increases. For example, if more resources are required to handle a higher volume of data traffic, additional nodes can be added to the session director cluster. This is in contrast to a hardware-based packet broker device such as a router, which must be replaced in its entirety if the amount of data traffic generated in the core network grows to exceed the router's hardware capabilities. The distributed nature of the session director cluster also allows for fault tolerance (i.e., failover of work from one session director node to another) in the case of a node crash or failure.

Second, since the packet processing performed at each session director node is executed in software (i.e., by one or more general purpose processing cores) rather than in hardware (i.e., by a dedicated ASIC/FPGA using rules programmed in a CAM table), the session director cluster can implement more flexible, dynamic, and complex packet processing operations than possible via conventional, CAM-based packet matching and processing. For example, in one embodiment, the session director cluster can correlate related packets across multiple different types of network protocols. As another example, the session director cluster can filter/forward packets based on deeply embedded packet data rather than simply header fields, and can support user-defined cascading and/or prioritization of filtering and forwarding policies. As yet another example, the session director cluster can implement sophisticated deduplication of traffic in order to prevent duplicate packets from reaching the analytic probes/tools. In certain embodiments, the general purpose processing cores of each session director node can be dynamically assigned to handle these various packet processing operations in a manner that optimizes use of the node's compute resources based on need/scale requirements.

Third, due to the software-based nature of the session director cluster, its feature set can be developed and enhanced more quickly and in a more cost-efficient manner than hardware-based solutions. This allows system vendors to rapidly iterate the packet broker in response to bugs or feature requests and provide greater value (in the form of, e.g., a reduced price) to customers. The BPB, which is the only piece of dedicated hardware in the packet broker, can be relatively simple in design and generally will not need to be modified in order to accommodate changes to the packet processing functions performed by the session director cluster.

### 2. Software-Based Packet Broker Architecture

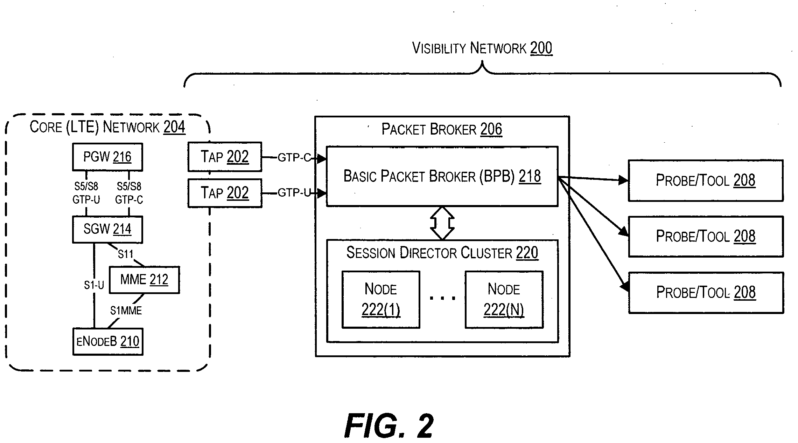

FIG. 2 depicts an example visibility network 200 that incorporates a software-based packet broker according to an embodiment of the present disclosure. As shown, visibility network 200 includes a number of taps 202 that are deployed in a core network 204 and are configured to replicate data and control traffic exchanged in network 204 to a packet broker 206. In FIG. 2, core network 204 is a mobile LTE network that comprises network elements specific to this type of network, such as an eNodeB 210, a mobility management entity (MME) 212, a serving gateway (SGW) 214, and a packet data network gateway (PGW) 216 which connects to an external packet data network such as the Internet. Further, in this particular example, taps 202 are configured to replicate and forward GPRS Tunneling Protocol control (GTP-C) traffic exchanged on an S11 interface between MME 212 and SGW 214 to packet broker 206, and replicate/forward GTP data (GTP-U) traffic exchanged on an S1U interface between eNodeB 210 and SGW 214 to packet broker 206. However, it should be appreciated that core network 204 can be any other type of computer network known in the art, such as a mobile 3G network, a landline local area network (LAN) or wide area network (WAN), etc.

Upon receiving the replicated data and control traffic via taps 202, packet broker 206 can perform various types of packet processing functions on the traffic (as configured/assigned by an operator of visibility network 200) and can forward the processed traffic to one or more probes/tools 208 for analysis.

As noted in the Background section, conventional packet brokers are generally implemented using dedicated networking hardware, such as a network switch or router. These hardware-based packet brokers rely on ASIC or FPGA-based packet processors to execute their assigned packet processing functions based on rules that are programmed into hardware memory tables (e.g., CAM tables) resident on the packet processors and/or line cards of the devices. While this hardware-based approach is functional, it also suffers from drawbacks such as poor scalability, inability to support flexible/dynamic/complex packet processing rules and operations, and high development cost and effort.

To address the foregoing and other related issues, packet broker 206 of FIG. 2 implements a novel, software-based architecture that comprises a basic packet broker (BPB) 218 and a session director cluster 220 (including nodes 222(1)-222(N)). BPB 218 can be implemented using a dedicated network switch or router, while each node 222 of session director cluster 220 can be implemented using a general purpose computer system (either physical or virtual), such as an x86-based system/blade/device. In operation, BPB 218 can receive the data and control traffic that is replicated from core network 204 via taps 202. However, rather than processing this traffic in hardware as in the case of prior art hardware-based packet brokers, BPB 218 can forward the traffic to session director cluster 220. In certain embodiments, BPB 218 can forward control traffic to every node 222 of cluster 220, while distributing data traffic in a load balanced manner across nodes 222 of cluster 220. Upon receiving the data/control traffic, each node 222 can execute, in software, appropriate packet processing functions on the traffic (e.g., rule generation, correlation, filtering, etc.), determine egress ports of BPB 218 on which the traffic should be sent out, tag the traffic with this egress port information, and send the tagged traffic back to the BPB 218. BPB 218 can then forward the traffic out of its appropriate egress ports (per the tags added by nodes 222) towards analytic probes/tools 208. With this architecture, session director cluster 220 can be understood as a software-based extension of BPB 218 that offloads the majority of the packet processing functions of packet broker 206 from hardware to software. This allows packet broker 206 to achieve better scalability and feature flexibility, and require less development cost/effort, than conventional hardware-based solutions. Additional details regarding the design and operation of software-based packet broker 206 are provided in the sections that follow.

It should be appreciated that FIG. 2 is illustrative and not intended to limit embodiments of the present disclosure. For example, the various entities shown in FIG. 2 may be arranged according to different configurations and/or include subcomponents or functions that are not specifically described. One of ordinary skill in the art will recognize other variations, modifications, and alternatives.

### 3. Packet Processing Workflows

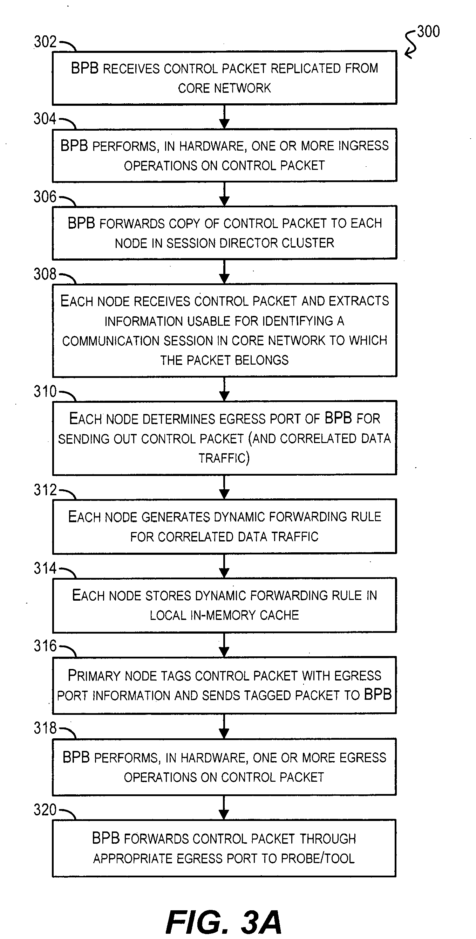

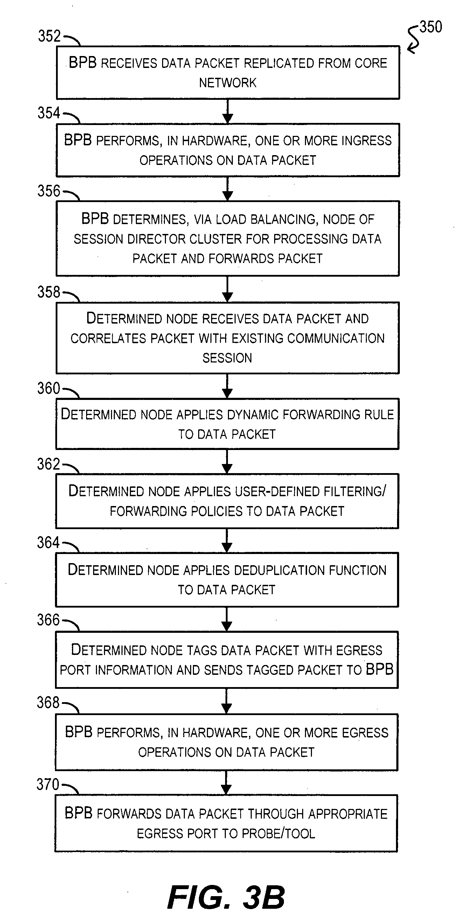

FIGS. 3A and 3B depict high-level workflows 300 and 350 that may be executed by software-based packet broker 206 of FIG. 2 for processing replicated traffic received from core network 204 according to an embodiment. In particular, workflow 300 corresponds to a workflow for processing control traffic and workflow 350 corresponds to a workflow for processing data traffic. Although shown in separate figures for ease of explanation, workflows 300 and 350 will generally be executed concurrently by packet broker 206.

Starting with block 302 of FIG. 3A, BPB 218 can receive a control packet that is replicated from core network 204 via, e.g., a tap 202. In embodiments where core network 204 is a mobile network (as in FIG. 2), the control packet may be a GTP-C or Radius protocol packet. In other embodiments, the control packet may be any other type of control/signaling protocol packet used in core network 204.

At block 304, BPB 218 can optionally perform, in hardware, one or more ingress operations on the control packet received at block 302. These ingress operations can include, e.g., timestamping the packet, tagging the packet with ingress port information, stripping one or more protocol headers (e.g., MPLS, NVGRE, VXLAN, etc.), and so on. Generally speaking, the nature of these ingress operations will vary depending on the configuration and intended use cases for visibility network 200. Once these operations have been completed, BPB 218 can forward a copy of the control packet to each node 222 of session director cluster 220 (block 306).

At block 308, each session director node 222 can receive the control packet and extract information from it that is usable for identifying a communication session or flow within core network 204 to which the control packet belongs. For example, in the case where core network 204 is an LTE network and the control packet is a GTP-C packet, each session director node 222 can extract mobile-specific parameters such as IMSI (International Mobile Subscriber Identity), TEID (tunnel end point identifier), APN (access point name), user equipment (UE) IP address, and/or others that identify a particular mobile user (i.e., subscriber) session on the LTE network.

Each session director node 222 can then determine an egress port of BPB 218 for sending out control and data traffic associated with the communication session identified at block 308 (block 310). This step can comprise, e.g., referencing a "load balance table" maintained in a local in-memory cache of node 222 that includes mappings between session identifiers (e.g., IMSI) and the egress ports of BPB 218, and assigning to the communication session the egress port mapped in the load balance table. The mappings in the table can be defined in such a way that the control/data traffic for the various communication sessions in core network 204 are load balanced across the egress ports of BPB 218 (and thus, analytic probes/tools 208).

Upon determining the egress port for the communication session, each session director node 222 can generate a dynamic forwarding rule for sending out data traffic that is part of the same session (i.e., "correlated" data traffic) on that port (block 312). For instance, if node 222 determined at block 310 that the egress port for the communication session should be port 2/1 of BPB 218, node 222 can generate a dynamic forwarding rule for sending out all data traffic with, e.g., the same IMSI, TEID, APN, and/or other session parameters on the same port 2/1. In this way, node 222 can direct correlated control and data traffic to the same analytic probe/tool 208. This dynamically generated forwarding rule can be stored in the local in-memory cache of the node (block 314).

A designated node of the session director cluster (referred to herein as the "primary" node) can then tag the control packet with information identifying the egress port determined at block 310 and send the tagged packet back to BPB 218 (block 316). In certain embodiments, multiple such primary nodes may be configured. Upon receiving the tagged control packet, BPB 218 can optionally perform, in hardware, one or more egress operations on the packet (e.g., stripping the egress port tag, applying an egress filter, etc.) (block 318). Finally, at block 320, BPB 218 can forward the control packet onward through the egress port identified in the tag to an analytic probe/tool 208.

Turning now to workflow 350 of FIG. 3B, at block 352, BPB 218 can receive a data packet that is replicated from core network 204 via, e.g., a tap 202. In embodiments where core network 204 is a mobile network (as in FIG. 2), the data packet may be a GTP-U or SGi packet. In other embodiments, the data packet may be any other type of data packet used in core network 204.

At block 354, BPB 218 can optionally perform, in hardware, one or more ingress operations on the data packet received at block 352. These ingress operations can include, e.g., timestamping the packet, tagging the packet with ingress port information, stripping one or more protocol headers (e.g., MPLS, NVGRE, VXLAN, etc.), and so on. Like the operations performed at block 304 of workflow 300, the nature of these ingress operations can vary depending on the configuration and intended use cases for visibility network 200.

Once the ingress operations at block 354 have been completed, BPB 218 can load balance the data packet across the nodes of the session director cluster and thereby determine a particular node 222(X) of session director cluster 220 that should process the data packet (block 356). This load balancing can be of any type (e.g., round-robin, weighted round-robin, etc.) and based on any parameters within the packet (e.g., GTP TEID, inner IP address(es), etc.). In this way, BPB 218 can effectively distribute the processing of data traffic across the nodes of session director cluster 220. Generally speaking, this load balancing is not state oriented and instead is based on a preconfigured load balancing algorithm. BPB 218 can then forward the data packet to the determined session director node 222(X).

At block 358, session director node 222(X) can receive the data packet and correlate the data packet with a particular communication session entry maintained in the node's local in-memory cache. In addition, if a dynamic forwarding rule for the session has been created per block 312 of workflow 300, session director node 222(X) apply the dynamic forwarding rule to the data packet in order to determine an egress port of BPB 218 for sending out the packet (block 360). If no dynamic forwarding rule exists yet, node 222(X) can assign some default egress port to the data packet (e.g., a port that is statically mapped to one or more header fields of the packet).

Upon applying the dynamic forwarding rule, session director node 222(X) can further apply one or more user-defined filtering or forwarding policies to the data packet (block 362). These user-defined filtering and forwarding policies can, e.g., drop certain data packets based on various parameters, such as IMSI, APN, eNodeB, etc. Alternatively (or in addition), these user-defined filtering and forwarding rules can change the egress port that is assigned to the data packet. For example, the operator of visibility network 200 may define a rule that forwards all data traffic for a particular range of IMSIs to a particular egress port. In certain embodiments, these filtering and forwarding policies can be dynamically cascaded in an order that is based on user-defined priorities.

Then, at block 364, session director node 222(X) can apply a deduplication function on the data packet. This deduplication function, which is described in further detail in Section 5.F below, can filter out the packet if it is determined to be a duplicate of another packet that has already been sent to analytic probes/tools 208.

At the conclusion of the deduplication process, session director node 222(X) can tag the data packet with information identifying the egress port for the packet (as determined via the processing in the previous steps) and send the tagged packet back to BPB 218 (block 366). Upon receiving the tagged data packet, BPB 218 can optionally perform, in hardware, one or more egress operations on the packet (e.g., stripping the egress port tag, applying an egress filter, etc.) (block 368). Finally, at block 370, BPB 218 can forward the data packet onward through the egress port identified in the tag to an analytic probe/tool 208.

### 4. Hardware Architecture of BPB

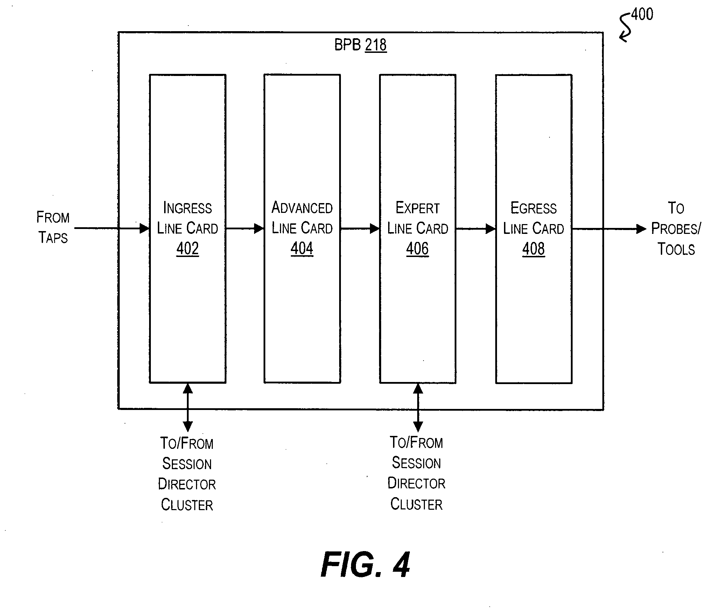

FIG. 4 is a simplified block diagram depicting an example hardware architecture 400 for BPB 218 of FIG. 2 according to an embodiment. This architecture clarifies how the functions/operations attributed to BPB 218 in workflows 300 and 350 may map to the hardware of the device. As shown in FIG. 4, architecture 400 includes an ingress line card 402, an "advanced" line card 404, an "expert" line card 406, and an egress line card 408.

In various embodiments, ingress line card 402 is configured to interface with taps 202 in core network 204, receive replicated control/data traffic from taps 202 on one or more ingress ports, and apply the ingress operations described with respect to blocks 304 and 354 of workflows 300 and 350 respectively. Ingress line card 402 can also flood the control traffic that it receives to nodes 222 of session director cluster 220.

Advanced line card 404 is configured to load balance data traffic that is received at ingress line card 402 across nodes 222 of session director cluster 220 (per block 356 of workflow 350). As mentioned previously, this load balancing can be performed based on a predefined tuple of header fields in the data traffic, TEID, and/or other criteria. In certain embodiments, advanced line card 404 can also perform other packet processing functions depending on the nature of the data traffic, such as packet slicing or applying one or more filters.

Expert line card 406 is configured to interface with session director cluster 220 and forward the data traffic that has been load balanced by advanced line card 404 to the appropriate nodes of cluster 220 for software-based processing. Once the nodes have completed their operations, expert line card 406 can receive the processed traffic back from the cluster and pass it to egress line card 408.

Egress line card 408 is configured to extract the egress port information included in the processed traffic and apply the egress operations described with respect to blocks 318 and 368 of workflows 300 and 350 respectively. Finally, egress line card 408 can forward the traffic through appropriate egress ports (as determined by the extracted egress port information) to analytic probes/tools 208.

It should be appreciated that hardware architecture 400 of FIG. 4 is illustrative and various modifications are possible. For example, while BPB 218 is shown as comprising one of each type of line card (i.e., ingress, advanced, expert, egress), in practice there can be multiple line cards of each type depending on the capacity needed. Further, the functions attributed to each line card type may be consolidated into fewer line card types, or spread out across additional line card types. Yet further, the various line cards shown in FIG. 4 may implement other functions not specifically described. One of ordinary skill in the art will recognize many variations, modifications, and alternatives.

### 5. Software Architecture of Session Director Node

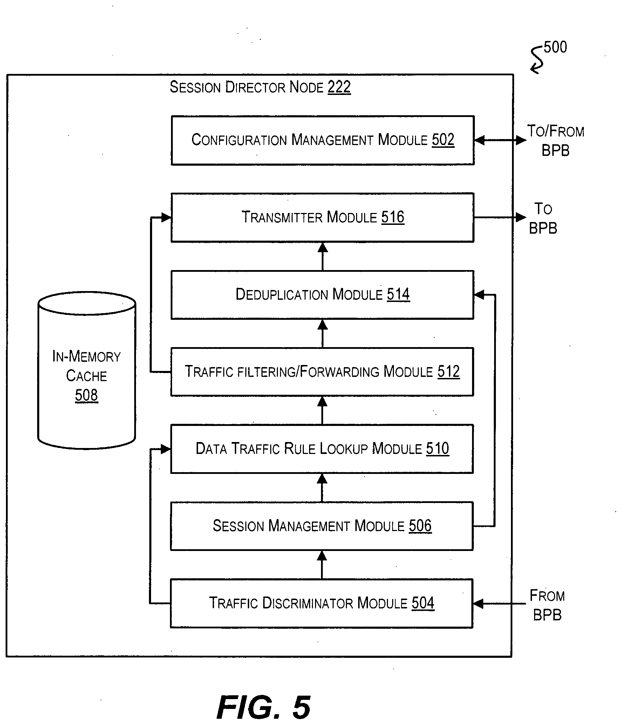

FIG. 5 is a simplified block diagram illustrating an example software architecture 500 of each node 222 of session director cluster 220 according to an embodiment. This architecture clarifies how the functions/operations attributed to session director cluster 220 in workflows 300 and 350 may map to the software running on each node. As shown in FIG. 5, architecture 500 includes a configuration management module 502, a traffic discriminator module 504, a session management module 506, an in-memory cache 508, a data traffic rule lookup module 510, a traffic filtering/forwarding module 512, a deduplication module 514, and a transmitter module 516. Each of these modules are discussed in turn in the subsections that follow.

It should be noted that, in certain embodiments, session director node 222 can dynamically assign its general purpose processing cores to execute modules 502, 504, 506, 510, 512, 514, and 516 in a manner that optimizes usage of those processing cores. For example, if node 222 determines that a relatively large amount of computing power is needed to execute the filtering and forwarding performed by traffic filtering/forwarding module 512 (due to, e.g., a large influx of data traffic), node 222 can assign more processing cores to this module. Conversely, if node 222 determines that less computing power is needed to execute the functionality of session management module 506 (due to, e.g., a relatively small amount of incoming control traffic), node 222 can assign fewer processing cores to this module. In this way, session director node 222 can dynamically load balance the processing of modules 502, 504, 506, 510, 512, 514, and 516 across its local compute resources on an as-needed basis.

Further, it should be appreciated that the functional boundaries between modules 502, 504, 506, 510, 512, 514, and 516 are flexible. For example, the processing attributed to one module can be subsumed by another module, modules can be merged or split, and so on. In addition, software architecture 500 is highly dynamic/configurable and other modules that perform other functions can be added as needed. For instance, in one embodiment, a packet sampling module may be added to sample in (i.e., allow) or sample out (i.e., discard) some portion of the data and/or control traffic. This sampling can be implemented with session and state tracking and can be performed based on a combination of one or more filters such as IMSI, IMEI, RAT type, user location, etc. (e.g., sample out 20% of IMSIs if device IMEIs are in range xxx to yyy at location LAC=abc or RAC=xyz). In another embodiment, a packet masking module may be added to enable customers to hide specific information that appears in the data/control traffic (e.g., credit card information or username in a specific protocol). With this module, a user can configure a packet offset at which a mask should be applied and a mask value. The user can then configure various match parameters to select a specific traffic stream and apply the mask value at the specified offset for that stream. Note that there are no restrictions regarding where the offset may be in the packet. In yet another embodiment, an IMSI limiting module may be added that allows a user to limit the number of IMSIs that are allowed to be sent to a specific egress port of the BPB. One of ordinary skill in the art will recognize many variations, modifications, and alternatives for the configuration of software architecture 500.

### 5.A Configuration Management

Configuration management module 502 acts as an interface between session director node 222 and BPB 218 for exchanging information regarding their respective configurations. For example, in one embodiment, configuration management module 502 can receive from BPB 218 (via a management protocol like Simple Network Management Protocol (SNMP)) information regarding the ingress ports and egress ports configured on BPB 218, such as port IDs and total number of ports. Session director node 222 can then use this information to create the load balance table described previously for defining initial load-balanced mappings between session identifiers and egress ports.

Configuration management module 502 can also expose a user interface (e.g., a command line or graphical interface) that allows users to enter various types of configuration information on session director node 222. This configuration information can include, e.g., session identifier information for facilitating generation of the load balance table, as well as user-defined filtering and forwarding policies which are discussed with respect to traffic filtering/forwarding module 512 below.

### 5.B Traffic Discriminator

Traffic discriminator module 504 is responsible for (1) ingesting the control and data traffic that is replicated from core network 204 and forwarded by BPB 218, (2) determining the type of each ingested packet (e.g., whether it is a GTP-C packet, Radius packet, GTP-U packet, SGi packet, etc.), and (3) passing the packet to an appropriate downstream module in architecture 500 based on its determined type. For example, in one set of embodiments, if traffic discriminator module 504 determines that the ingested packet is a control packet (e.g., GTP-C or Radius), module 504 can pass the packet to session management module 506. Alternatively, if traffic discriminator module 504 determines that the ingested packet is a data packet (e.g., GTP-U or SGi), module 504 can pass the packet to data traffic rule lookup module 510.

### 5.C Session Management

Session management module 506 is responsible for processing control traffic received at session director node 222, in accordance with blocks 308-314 of workflow 300. In particular, upon receiving a control packet from traffic discriminator module 504, session management module 506 can extract information from the control packet that is usable for identifying a communication session or flow within core network 204 to which the control packet belongs. As mentioned previously, in the case of an LTE core network, this information can include, e.g., IMSI, APN, TEID, UE IP address, and so on. Session management module 506 can store this extracted information as a session entry in in-memory cache 508.

In addition, session management module 506 can determine an appropriate egress port of BPB 218 on which the control packet, as well as all correlated data traffic, should be sent out. This step can comprise referencing the mappings in the load balance table and selecting the egress port ID that is mapped to the current session identifier (e.g., IMSI).

Finally, session management module 506 can generate a dynamic forwarding rule for subsequent data traffic that is received from core network 204 and is correlated with the current control packet/session. This dynamic forwarding rule can include, as lookup parameters, one or more identifiers that may be included in such data traffic (such as UE IP address, TEID, etc.), and an action to forward all matched packets to the egress port determined for the session. Session management module 506 can store this dynamically generated forwarding rule in in-memory cache 508 for use by data traffic rule lookup module 510 as discussed below.

It should be noted that session management module 506 is not limited to processing control traffic for a single type of control/signaling protocol; rather, module 506 can be configured to identify multiple different types of control protocols used in core network 204 (e.g., GTP-C or Radius) and generate appropriate forwarding rules for data traffic correlated with each control protocol (e.g., GTP-U or SGi data traffic).

### 5.D Data Traffic Rule Lookup

Data traffic rule lookup module 510 is responsible for receiving data traffic that is passed by traffic discriminator module 504 and determining an initial egress port of BPB 218 on which the data packet should be sent out, based on the session information established by session management module 506. In particular, data traffic rule lookup module 510 can first correlate each received data packet with a communication session maintained in in-memory cache 508. In the case where core network 204 is an LTE network, this can involve, e.g., matching a UE IP, TEID, or other parameters in the data packet with the various session entries stored in cache 508.

Upon correlating the data packet with a particular session, data traffic rule lookup module 510 can find and apply the dynamic forwarding rule for the session stored in cache 508 to that data packet, thereby identifying the appropriate egress port for the packet. In scenarios where no dynamic forwarding rule exists, data traffic rule lookup module 510 can apply a default rule to the data packet (e.g., a rule that statically maps one or more header fields of the packet to a particular egress port).

### 5.E Traffic Filtering/Forwarding

Traffic filtering/forwarding module 512 is responsible for applying user-defined filtering and forwarding policies, if any such policies exist, to the data traffic that has been processed by data traffic rule lookup module 510. These policies, which can be based on any number of parameters such as IMSI, APN, user location, eNodeB, SGW, MME, radio access technology (RAT) type, charging (e.g., prepaid or postpaid) status, IMEI, etc., allows node 222 to implement custom filtering and forwarding behavior that alter the initial load-balanced assignment of data packets to egress ports as discussed above.

For instance, in one embodiment, traffic filtering/forwarding module 512 can apply one or more user-defined filtering policies that automatically drop all data packets that are associated with a particular IMSI or APN or a range of IMSIs. In another embodiment, traffic filtering/forwarding module 512 can apply one or more user-defined forwarding policies that forward all data packets associated with a particular IMSI/APN or a range of IMSIs to a particular egress port, or group of egress ports, on BPB 218. In yet other embodiments, traffic filtering/forwarding module 512 can apply one or more user-defined filtering/forwarding policies that drop or forward traffic based on other criteria (e.g., all VOLTE traffic, traffic from certain types of UE devices based on IMEI, etc.). These filtering/forwarding policies will override the initial egress port assignments made by data traffic rule lookup module 510.

If multiple filtering/forwarding policies are defined on node 222, traffic filtering/forwarding module 512 can cascade the various policies in a user-defined order, or according to user-defined priorities that are attached to each policy. For example, assume a first policy is defined that forwards all traffic associated with IMSI "1234567" out of egress port 3/1 of BPB 218, and this first policy is assigned a user-defined priority of 1. Further assume a second policy is defined that drops all traffic associated with APN "volte.sf.net," and this second policy is assigned a user-defined priority of 2. In this scenario, if a packet is received that is associated with IMSI 1234567 and APN volte.sf.net, the first policy will take precedence over the second policy per their respective priorities, and thus the packet will be forwarded out of egress port 3/1. If a second packet is received that is associated with IMSI 2345678 and APN volte.sf.net, the first policy is no longer relevant, and thus the second policy will be applied and the packet will be dropped.

Once traffic filtering/forwarding module 512 has completed its processing, module 512 can pass on the data traffic to deduplication module 514 (or directly to transmitter module 516 in cases where only certain flows should be deduplicated).

### 5.F Deduplication

In certain scenarios, multiple copies of the same control or data packet may be replicated from core network 204 and sent to packet broker 206. For example, the same packet may traverse multiple interfaces in core network 204 and may be tapped more than once. Or, the same packet content may be encapsulated multiple times into different packets by different protocols in core network 204, such that the packet payload is identical across the packets (i.e., only protocol headers are different). To address this, deduplication module 514 is configured to identify and filter such duplicate traffic before it can reach analytic probes/tools 208.

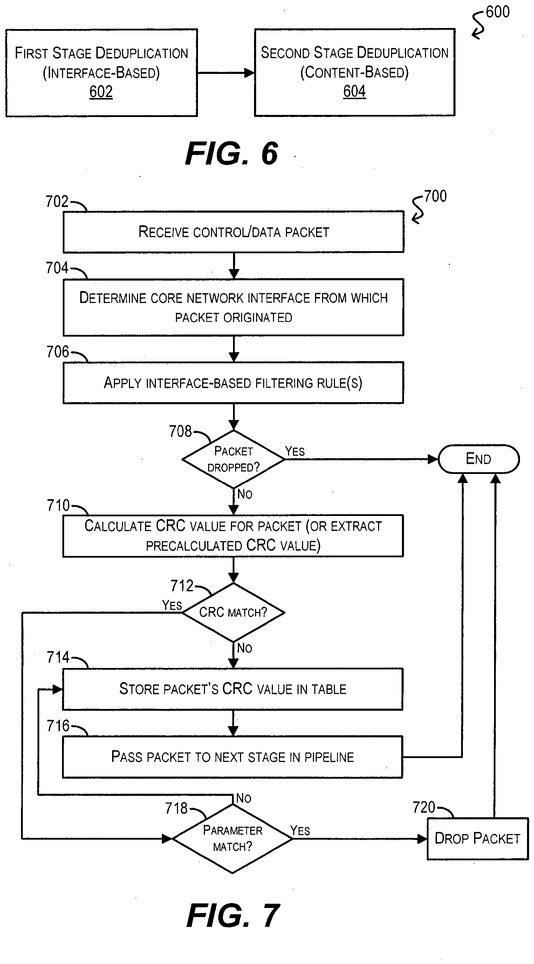

FIG. 6 depicts a block diagram of a two-stage process 600 that can be executed by deduplication module 514 for deduplicating control/data traffic according to an embodiment. As shown, at block 602 of process 600, deduplication module 514 can receive a control/data packet and can implement a first stage deduplication based on the core network interfaces from which the control/data packet was replicated. For example, in the case where core network 204 is an LTE network, the traffic sent on the S1U and S5/S8 interfaces are known to be identical. Accordingly, for this use case, first stage deduplication 602 can apply one or more interface-based filtering rules that allow S1U traffic to be forwarded while dropping S5/S8 traffic.

Once the first stage deduplication has been completed, deduplication module 514 can implement a second stage deduplication (block 604) that is based on the content of the control/data packet. More particularly, deduplication module 514 can calculate a cyclical redundancy check (CRC) value for the payload of the control/data packet (or extract such a CRC value from the packet header, if it exists there), and compare the packet's CRC value with stored CRC values of other packets that have been previously processed by session director node 222. If the packet's CRC value matches any stored CRC value, deduplication module 514 can conclude that the packet is a duplicate and thus can drop the packet. Alternatively, module 514 can perform an additional check (e.g., compare one or more parameters of the current packet and the previous packet, such as TEID, UE IP address, etc.) before dropping the current packet. If the packet's CRC value does not match any stored CRC value, deduplication module 514 can conclude that the packet is not a duplicate and pass the packet to transmitter module 516 of architecture 500.

Taken together, the two deduplication stages shown in process 600 enable deduplication module 514 to comprehensively identify and filter all duplicate traffic originating from core network 204.

FIG. 7 depicts a workflow 700 that provides additional details regarding the deduplication processing performed by deduplication module 514 according to an embodiment. Starting with block 702, deduplication module 514 can receive (from, e.g., traffic filtering/forwarding module 512) a control/data packet that was replicated from core network 204.

At block 704, deduplication module 514 can determine an interface in core network 204 from which the packet originated. Module 514 can perform this determination by, e.g., examining one or more header fields of the packet, and/or session information stored in in-memory cache 208. Deduplication module 514 can then apply one or more preconfigured filtering rules based on the packet's associated interface (block 706). These interface-based filtering rules will generally differ depending on the nature of core network 204. For instance, in mobile (e.g., LTE) networks, traffic that is sent on the S1U and S5/S8 interfaces will typically be identical. Thus, in this context, deduplication module 514 can be configured with one or more filtering rules that allow traffic tapped from the S1U interface and drop traffic tapped from the S5/S8 interface (or vice versa).

Upon applying the interface-based filtering rules at block 706, deduplication module 514 can check whether the packet has been dropped or not (block 708). If the packet has been dropped, workflow 700 can end.

On the other hand, if the packet has not been dropped, deduplication module 514 can calculate a CRC value for the packet based on the packet's payload (block 710). Alternatively, if the packet already includes a precomputed CRC value in its header, module 514 can extract the precomputed CRC value from the packet header. This precomputed CRC value can correspond to, e.g., a Layer 2 frame check sequence (FCS), a Layer 3 (IP) CRC, a Layer 4 checksum, and/or any combination of these values. Deduplication module 514 can then compare the packet's CRC value against a table of stored CRC values for packets previously processed by module 514 (block 712).

If the packet's CRC value does not match any of the stored CRC values, deduplication module 514 can conclude that the packet is not a duplicate of any previously processed packets. As a result, module 514 can store the packet's CRC value in the CRC table and pass the packet to the next stage in node 222's software pipeline (e.g., transmitter module 516) (blocks 714 and 716).

However, if the packet's CRC value matches the stored CRC value for a previous packet, deduplication module 514 can compare one or more parameters of the current packet with the corresponding parameters of the previous packet (block 718). These parameters can include, e.g., communication session-related parameters such as TEID, IMSI, source and destination IP addresses, etc. If the compared parameters match, deduplication module 514 can conclude that the current packet is a duplicate and thus can drop the packet (block 720). Otherwise, deduplication module 514 can conclude that the current packet is a not a duplicate and thus can store the packet's CRC value in the CRC table and pass the packet to the next stage in node 222's software pipeline as per blocks 714 and 716. At the conclusion of either block 720 or 716, workflow 700 can end.

### 5.G Transmitter

Transmitter module 516 is responsible for tagging the control/data packet replicated from core network 204 with egress port information determined via the other modules of software architecture 500. Module 516 can include this information in any field or location within the packet that is made known to BPB 218. Transmitter module 516 can then send the tagged packet back to BPB 218 for forwarding to analytic probes/tools 208 in accordance with the egress port information.

### 6. Example Network Device

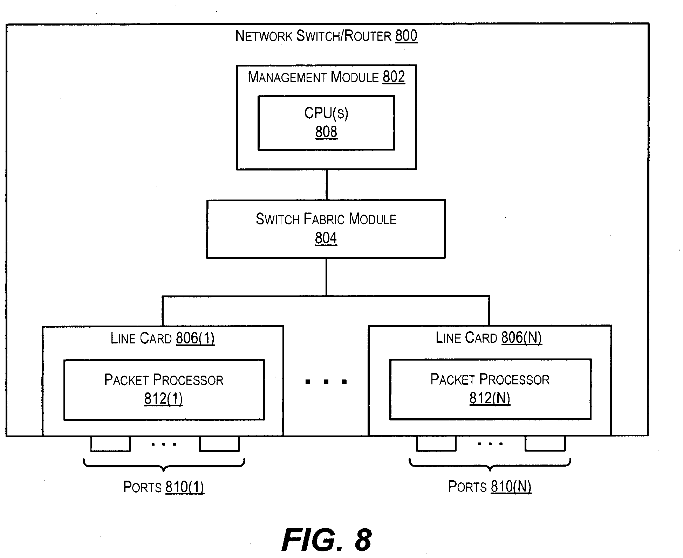

FIG. 8 depicts an example network device (e.g., switch/router) 800 according to an embodiment. Network switch/router 800 can be used to implement the BPB described throughout this disclosure.

As shown, network switch/router 800 includes a management module 802, a switch fabric module 804, and a number of line cards 806(1)-806(N). Management module 802 includes one or more management CPUs 808 for managing/controlling the operation of the device. Each management CPU 808 can be a general purpose processor, such as a PowerPC, Intel, AMD, or ARM-based processor, that operates under the control of software stored in an associated memory (not shown).

Switch fabric module 804 and line cards 806(1)-806(N) collectively represent the data, or forwarding, plane of network switch/router 800. Switch fabric module 804 is configured to interconnect the various other modules of network switch/router 800. Each line card 806(1)-806(N), which can correspond to the various line cards describe with respect to hardware architecture 400 of FIG. 4, can include one or more ingress/egress ports 810(1)-810(N) that are used by network switch/router 800 to send and receive packets. Each line card 806(1)-806(N) can also include a packet processor 812(1)-812(N). Packet processor 812(1)-812(N) is a hardware processing component (e.g., an FPGA or ASIC) that can make wire speed decisions on how to handle incoming or outgoing traffic.

It should be appreciated that network switch/router 800 is illustrative and not intended to limit embodiments of the present invention. Many other configurations having more or fewer components than switch/router 800 are possible.

### 7. Example Computer System

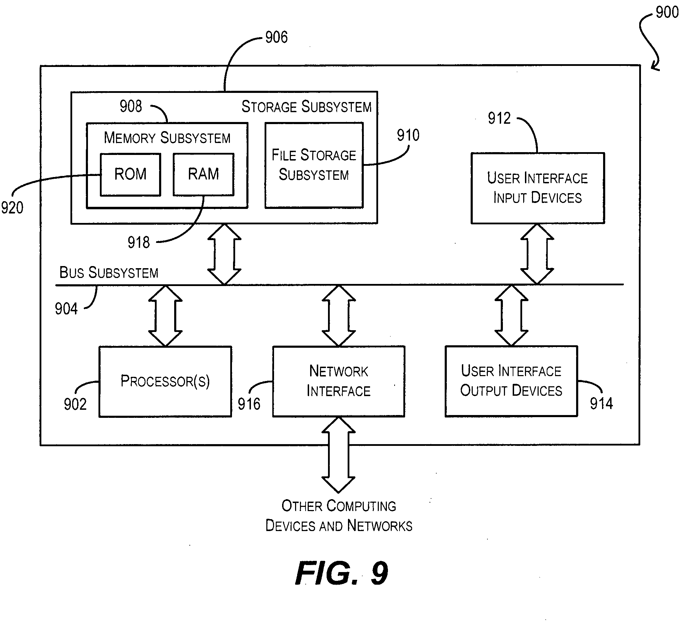

FIG. 9 depicts an example computer system 900 according to an embodiment. Computer system 900 can be used to implement the nodes of the session director cluster described throughout this disclosure.

As shown in FIG. 9, computer system 900 can include one or more general purpose processors (e.g., CPUs) 902 that communicate with a number of peripheral devices via a bus subsystem 904. These peripheral devices can include a storage subsystem 906 (comprising a memory subsystem 908 and a file storage subsystem 910), user interface input devices 912, user interface output devices 914, and a network interface subsystem 916.

Bus subsystem 904 can provide a mechanism for letting the various components and subsystems of computer system 900 communicate with each other as intended. Although bus subsystem 904 is shown schematically as a single bus, alternative embodiments of the bus subsystem can utilize multiple buses.

Network interface subsystem 916 can serve as an interface for communicating data between computer system 900 and other computing devices or networks. Embodiments of network interface subsystem 916 can include wired (e.g., coaxial, twisted pair, or fiber optic Ethernet) and/or wireless (e.g., Wi-Fi, cellular, Bluetooth, etc.) interfaces.

User interface input devices 912 can include a keyboard, pointing devices (e.g., mouse, trackball, touchpad, etc.), a scanner, a barcode scanner, a touch-screen incorporated into a display, audio input devices (e.g., voice recognition systems, microphones, etc.), and other types of input devices. In general, use of the term "input device" is intended to include all possible types of devices and mechanisms for inputting information into computer system 900.

User interface output devices 914 can include a display subsystem, a printer, a fax machine, or non-visual displays such as audio output devices, etc. The display subsystem can be a cathode ray tube (CRT), a flat-panel device such as a liquid crystal display (LCD), or a projection device. In general, use of the term "output device" is intended to include all possible types of devices and mechanisms for outputting information from computer system 900.

Storage subsystem 906 can include a memory subsystem 908 and a file/disk storage subsystem 910. Subsystems 908 and 910 represent non-transitory computer-readable storage media that can store program code and/or data that provide the functionality of various embodiments described herein.

Memory subsystem 908 can include a number of memories including a main random access memory (RAM) 918 for storage of instructions and data during program execution and a read-only memory (ROM) 920 in which fixed instructions are stored. File storage subsystem 910 can provide persistent (i.e., nonvolatile) storage for program and data files and can include a magnetic or solid-state hard disk drive, an optical drive along with associated removable media (e.g., CD-ROM, DVD, Blu-Ray, etc.), a removable flash memory-based drive or card, and/or other types of storage media known in the art.

It should be appreciated that computer system 900 is illustrative and not intended to limit embodiments of the present disclosure. Many other configurations having more or fewer components than computer system 900 are possible.

The above description illustrates various embodiments of the present disclosure along with examples of how aspects of the present disclosure may be implemented. The above examples and embodiments should not be deemed to be the only embodiments, and are presented to illustrate the flexibility and advantages of the present disclosure as defined by the following claims. For example, although certain embodiments have been described with respect to particular workflows and steps, it should be apparent to those skilled in the art that the scope of the present disclosure is not strictly limited to the described workflows and steps. Steps described as sequential may be executed in parallel, order of steps may be varied, and steps may be modified, combined, added, or omitted. As another example, although certain embodiments have been described using a particular combination of hardware and software, it should be recognized that other combinations of hardware and software are possible, and that specific operations described as being implemented in software can also be implemented in hardware and vice versa.

The specification and drawings are, accordingly, to be regarded in an illustrative rather than restrictive sense. Other arrangements, embodiments, implementations and equivalents will be evident to those skilled in the art and may be employed without departing from the scope of the invention as set forth in the following claims.

## Claims

1. A packet broker (206) for use in a visibility network (200), the packet broker (206) comprising:
a network device (218; 800); and
a cluster (220) of one or more processing nodes (222),
wherein the network device (218; 800) is configured to receive a control or data packet replicated from a core network (204),
wherein the network device (218; 800) is configured to forward the control or data packet to at least one processing node in the cluster (220) of one or more processing nodes (222),
wherein the at least one processing node in the cluster (220) is configured to execute one or more packet processing functions on the control or data packet, the one or more packet processing functions being operable to determine an egress port of the network device (218; 800) through which the control or data packet should be forwarded to a probe or tool (208) of the visibility network (200) for analysis, to tag the control or data packet with egress port information identifying the egress port, and to send the tagged control or data packet back to the network device (218; 800), and
wherein the network device (218; 800) is configured to, in response to receiving the tagged control or data packet from the at least one processing node, transmit the control or data packet out of the determined egress port in accordance with the egress port information in the tagged control or data packet.

2. The packet broker (206) of claim 1, wherein the network device (218; 800) is a hardware-based switch or router.

3. The packet broker (206) according to any of the preceding claims, wherein the each processing node (222) is a general purpose computer system.

4. The packet broker (206) according to any of the preceding claims, wherein if the control or data packet is a control packet, the network device (218; 800) is configured to forward a copy of the control packet to each processing node (222) in the cluster (220).

5. The packet broker (206) according to any of the preceding claims, wherein if the control or data packet is a data packet, the network device (218; 800):
is configured to determine, using a load balancing algorithm, a single processing node in the cluster (220) for handling the data packet; and
is configured to forward the data packet to the single processing node,
wherein the single processing node is determined based on one or more parameters included in the data packet.

6. The packet broker (206) according to any of the preceding claims, wherein if the control or data packet is a control packet, the one or more packet processing functions include:
extracting information from the control packet for identifying a communication session in the core network (204) to which the control packet belongs,
wherein the one or more packet processing functions further include:
determining the egress port through which the control packet should be forwarded; and
generating a dynamic forwarding rule for data traffic that is part of the same communication session as the control packet, the dynamic forwarding rule being configured to forward the data traffic through the same egress port as the control packet.

7. The packet broker (206) according to any of the preceding claims, wherein if the control or data packet is a data packet, the one or more packet processing functions include:
correlating the data packet with a communication session in the core network (204); and
applying, to the data packet, a dynamic forwarding rule associated with the communication session to determine the egress port for the data packet.

8. The packet broker (206) according to any of the preceding claims, wherein if the control or data packet is a data packet, the one or more packet processing functions include:
applying one or more user-defined filtering or forwarding policies to the data packet.

9. The packet broker (206) of claim 8, wherein each of the one or more user-defined filtering or forwarding policies are assigned a user-defined priority, and wherein the one or more user-defined filtering or forwarding policies are applied to the data packet in an order that is based on their respective priorities.

10. The packet broker (206) of claim 8 or 9, wherein the one or more filtering or forwarding policies include a policy based on an International Mobile Subscriber Identity, IMSI, an access point name, APN, an International Mobile Equipment Identity, IMEI, an Evolved NodeB, ENodeB, a Serving Gateway, SGW, a radio access technology, RAT type, a user location, or a charging status associated with the data packet.

11. The packet broker (206) according to any of the preceding claims, wherein the one or more packet processing functions include:
deduplicating the control or data packet.

12. The packet broker (206) according to any of the preceding claims, wherein the core network (204) is a mobile LTE or 3G network; and wherein the control or data packet is a GTP-C packet, a GTP-U packet, a Radius packet, or a SGi packet.

13. A non-transitory computer readable storage medium having stored thereon program code executable by a processing node in a cluster (220) of processing nodes (222), the cluster (220) of processing nodes (222) being configured to act, in concert with a hardware-based network device (218; 800), as a packet broker (206) in a visibility network (200), the program code causing the processing node to:
receive a control or data packet from the network device (218; 800), the control or data packet being replicated from a core network (204);
execute one or more packet processing functions on the control or data packet, the one or more packet processing functions being operable to determine an egress port of the network device (218; 800) through which the control or data packet should be forwarded to a probe or tool (208) of the visibility network (200) for analysis, to tag the control or data packet with egress port information identifying the egress port, and to send the tagged control or data packet back to the network device (218; 800), and
wherein the network device (218; 800) is configured to, in response to receiving the tagged control or data packet from the at least one processing node, transmit the control or data packet out of the determined egress port in accordance with the egress port information in the tagged control or data packet.

14. A method performed by a processing node in a cluster (220) of processing nodes (222), the cluster (220) of processing nodes (222) acting in concert with a hardware-based network device (218; 800), as a packet broker (206) in a visibility network (200), the method comprising:
receiving, by the processing node (222), a control or data packet from the network device, the control or data packet being replicated from a core network (204);
executing one or more packet processing functions on the control or data packet, the one or more packet processing functions being operable to determine an egress port of the network device (218; 800) through which the control or data packet should be forwarded to a probe or tool (208) of the visibility network (200) for analysis, to tag the control or data packet with egress port information identifying the egress port, and to send the tagged control or data packet back to the network device (218; 800), and
wherein the network device (218; 800) is configured to, in response to receiving the tagged control or data packet from the at least one processing node, transmit the control or data packet out of the determined egress port in accordance with the egress port information in the tagged control or data packet.

## Patentansprüche

1. Paketvermittler (206) zur Verwendung in einem Sichtbarkeitsnetzwerk (200), wobei der Paketvermittler (206) Folgendes umfasst:
ein Netzwerkgerät (218; 800); und
ein Cluster (220) von einem oder mehreren Verarbeitungsknoten (222),
wobei das Netzwerkgerät (218; 800) zum Empfangen eines von einem Kernnetz (204) replizierten Steuer- oder Datenpakets konfiguriert ist,
wobei das Netzwerkgerät (218; 800) zum Weiterleiten des Steuer- oder Datenpakets zu wenigstens einem Verarbeitungsknoten in dem Cluster (220) von einem oder mehreren Verarbeitungsknoten (222) konfiguriert ist,
wobei der wenigstens eine Verarbeitungsknoten in dem Cluster (220) konfiguriert ist zum Ausführen von einer oder mehreren Paketverarbeitungsfunktionen an dem Steuer- oder Datenpaket, wobei die ein oder mehreren Paketverarbeitungsfunktionen die Aufgabe haben, einen Austrittsport des Netzwerks (218; 800) zu bestimmen, durch den das Steuer- oder Datenpaket zur Analyse zu einer Sonde oder einem Werkzeug (208) des Sichtbarkeitsnetzwerks (200) weitergeleitet werden soll, zum Markieren des Steuer- oder Datenpakets mit den Austrittsport identifizierenden Austrittsportinformationen und zum Zurücksenden des markierten Steuer- oder Datenpakets zum Netzwerkgerät (218; 800), und
wobei das Netzwerkgerät (218; 800) konfiguriert ist zum Übertragen, als Reaktion auf den Empfang des markierten Steuer- oder Datenpakets von dem wenigstens einen Verarbeitungsknoten, des Steuer- oder Datenpakets aus dem bestimmten Austrittsport gemäß den Austrittsportinformationen in dem markierten Steuer- oder Datenpaket.

2. Paketvermittler (206) nach Anspruch 1, wobei das Netzwerkgerät (218; 800) ein Hardware-basierter Switch oder Router ist.

3. Paketvermittler (206) nach einem der vorherigen Ansprüche, wobei jeder Verarbeitungsknoten (222) ein Universalcomputersystem ist.

4. Paketvermittler (206) nach einem der vorherigen Ansprüche, wobei, wenn das Steuer- oder Datenpaket ein Steuerpaket ist, das Netzwerkgerät (218; 800) zum Weiterleiten einer Kopie des Steuerpakets zu jedem Verarbeitungsknoten (222) in dem Cluster (220) konfiguriert ist.

5. Paketvermittler (206) nach einem der vorherigen Ansprüche, wobei, wenn das Steuer- oder Datenpaket ein Datenpaket ist, das Netzwerkgerät (218; 800) zum Bestimmen, mit einem Lastausgleichsalgorithmus, eines einzelnen Verarbeitungsknotens in dem Cluster (220) zum Handhaben des Pakets konfiguriert ist; und
zum Weiterleiten des Datenpakets zu dem einzelnen Verarbeitungsknoten konfiguriert ist,
wobei der einzelne Verarbeitungsknoten auf der Basis von einem oder mehreren in dem Datenpaket enthaltenen Parametern bestimmt wird.

6. Paketvermittler (206) nach einem der vorherigen Ansprüche, wobei, wenn das Steuer- oder Datenpaket ein Steuerpaket ist, die ein oder mehreren Paketverarbeitungsfunktionen Folgendes beinhalten:
Extrahieren von Informationen aus dem Steuerpaket zum Identifizieren einer Kommunikationssitzung in dem Kernnetzwerk (204), zu dem das Steuerpaket gehört,
wobei die ein oder mehreren Paketverarbeitungsfunktionen ferner Folgendes beinhalten:
Bestimmen des Austrittsports, durch den das Steuerpaket weitergeleitet werden soll; und
Erzeugen einer dynamischen Weiterleitungsregel für Datenverkehr, die Teil derselben Kommunikationssitzung ist wie das Steuerpaket, wobei die dynamische Weiterleitungsregel zum Weiterleiten des Datenverkehrs durch denselben Austrittsport konfiguriert ist wie das Steuerpaket.

7. Paketvermittler (206) nach einem der vorherigen Ansprüche, wobei, wenn das Steuer- oder Datenpaket ein Datenpaket ist, die ein oder mehreren Paketverarbeitungsfunktionen Folgendes beinhalten:
Korrelieren des Datenpakets mit einer Kommunikationssitzung in dem Kernnetzwerk (204); und
Anwenden einer mit der Kommunikationssitzung assoziierten dynamischen Weiterleitungsregel auf das Datenpaket, um den Austrittsport für das Datenpaket zu bestimmen.

8. Paketvermittler (206) nach einem der vorherigen Ansprüche, wobei, wenn das Steuer- oder Datenpaket ein Datenpaket ist, die ein oder mehreren Paketverarbeitungsfunktionen Folgendes beinhalten:
Anwenden von einer oder mehreren benutzerdefinierten Filter- oder Weiterleitungsrichtlinien auf das Datenpaket.

9. Paketvermittler (206) nach Anspruch 8, wobei jeder der ein oder mehreren benutzerdefinierten Filter- oder Weiterleitungsrichtlinien eine benutzerdefinierte Priorität zugeordnet wird, und wobei die ein oder mehreren benutzerdefinierten Filter- oder Weiterleitungsrichtlinien auf das Datenpaket in einer Reihenfolge auf der Basis ihrer jeweiligen Prioritäten angewendet werden.

10. Paketvermittler (206) nach Anspruch 8 oder 9, wobei die ein oder mehreren Filter- oder Weiterleitungsrichtlinien eine Richtlinie auf der Basis einer IMSI (International Mobile Subscriber Identity), eines APN (Access Point Name), einer IMEI (International Mobile Equipment Identity), eines EnodeB (Evolved NodeB), eines SGW (Serving Gateway), eines RAT-(Radio Access Technology)-Typs, eines Benutzerstandorts oder eines Ladestatus in Assoziation mit dem Datenpaket beinhalten.

11. Paketvermittler (206) nach einem der vorherigen Ansprüche, wobei die ein oder mehreren Paketverarbeitungsfunktionen Folgendes beinhalten:
Entduplizieren des Steuer- oder Datenpakets.

12. Paketvermittler (206) nach einem der vorherigen Ansprüche, wobei das Kernnetzwerk (204) ein mobiles LTE- oder 3G-Netzwerk ist; und wobei das Steuer- oder Datenpaket ein GTP-C-Paket, ein GTP-U-Paket, ein Radius-Paket oder ein SGi-Paket ist.

13. Nichtflüchtiges computerlesbares Speichermedium, auf dem Programmcode gespeichert ist, der von einem Verarbeitungsknoten in einem Cluster (220) von Verarbeitungsknoten (222) ausgeführt werden kann, wobei das Cluster (220) von Verarbeitungsknoten (222) so konfiguriert ist, dass es in Übereinstimmung mit einem Hardware-basierten Netzwerkgerät (218; 800) als Paketvermittler (206) in einem Sichtbarkeitsnetzwerk (200) agiert, wobei der Programmcode bewirkt, dass der Verarbeitungsknoten Folgendes durchführt:
Empfangen eines Steuer- oder Datenpakets von dem Netzwerkgerät (218; 800), wobei das Steuer- oder Datenpaket von einem Kernnetzwerk (204) repliziert wird;
Ausführen von einer oder mehreren Paketverarbeitungsfunktionen an dem Steuer- oder Datenpaket, wobei die ein oder mehreren Paketverarbeitungsfunktionen die Aufgabe haben, einen Austrittsport des Netzwerkgeräts (218; 800) zu bestimmen, durch den das Steuer- oder Datenpaket zur Analyse zu einer Sonde oder einem Werkzeug (208) des Sichtbarkeitsnetzwerks (200) weitergeleitet werden soll, zum Markieren des Steuer- oder Datenpakets mit den Austrittsport identifizierenden Austrittsportinformationen und zum Zurücksenden des markierten Steuer- oder Datenpakets zum Netzwerkgerät (218; 800), und
wobei das Netzwerkgerät (218; 800) so konfiguriert ist, dass es als Reaktion auf den Empfang des markierten Steuer- oder Datenpakets von dem wenigstens einen Verarbeitungsknoten das Steuer- oder Datenpaket aus dem bestimmten Austrittsport gemäß den Austrittsportinformationen in dem markierten Steuer- oder Datenpaket überträgt.

14. Verfahren, durchgeführt von einem Verarbeitungsknoten in einem Cluster (220) von Verarbeitungsknoten (222), wobei das Cluster (220) von Verarbeitungsknoten (222) in Übereinstimmung mit einem Hardware-basierten Netzwerkgerät (218; 800) als Paketvermittler (206) in einem Sichtbarkeitsnetzwerk (200) agiert, wobei das Verfahren Folgendes beinhaltet:
Empfangen, durch den Verarbeitungsknoten (222), eines Steuer- oder Datenpakets von dem Netzwerkgerät, wobei das Steuer- oder Datenpaket von einem Kernnetzwerk (204) repliziert wird;
Ausführen von einer oder mehreren Paketverarbeitungsfunktionen an dem Steuer- oder Datenpaket, wobei die ein oder mehreren Paketverarbeitungsfunktionen die Aufgabe haben, einen Austrittsport des Netzwerkgeräts (218; 800) zu bestimmen, durch den das Steuer- oder Datenpaket zur Analyse zu einer Sonde oder einem Werkzeug (208) des Sichtbarkeitsnetzwerks (200) weitergeleitet werden soll, zum Markieren des Steuer- oder Datenpakets mit den Austrittsport identifizierenden Austrittsportinformationen, und zum Zurücksenden des markierten Steuer- oder Datenpakets zum Netzwerkgerät (218; 800), und
wobei das Netzwerkgerät (218; 800) so konfiguriert ist, dass es als Reaktion auf den Empfang des markierten Steuer- oder Datenpakets von dem wenigstens einen Verarbeitungsknoten das Steuer- oder Datenpaket aus dem bestimmten Austrittsport gemäß den Austrittsportinformationen in dem markierten Steuer- oder Datenpaket überträgt.

## Revendications

1. Négociateur de paquets (206) destiné à être utilisé dans un réseau de visibilité (200), le négociateur de paquets (206) comprenant :
un dispositif de réseau (218 ; 800) ; et
une grappe (220) d'un ou plusieurs nœuds de traitement (222),
le dispositif de réseau (218 ; 800) étant configuré pour recevoir un paquet de contrôle ou de données répliqué depuis un réseau central (204),
le dispositif de réseau (218 ; 800) étant configuré pour transférer le paquet de contrôle ou de données vers au moins un nœud de traitement dans la grappe (220) d'un ou plusieurs nœuds de traitement (222),
l'au moins un nœud de traitement dans la grappe (220) étant configuré pour exécuter une ou plusieurs fonctions de traitement de paquet sur le paquet de contrôle ou de données, les une ou plusieurs fonctions de traitement de paquet étant fonctionnelles pour déterminer un port de sortie du dispositif de réseau (218 ; 800) par lequel le paquet de contrôle ou de données doit être transféré vers une sonde ou un outil (208) du réseau de visibilité (200) en vue de son analyse, étiqueter le paquet de contrôle ou de données avec une information de port de sortie identifiant le port de sortie et renvoyer le paquet de contrôle ou de données étiqueté au dispositif de réseau (218 ; 800), et
le dispositif de réseau (218 ; 800) étant configuré pour, en réponse à la réception du paquet de contrôle ou de données étiqueté en provenance de l'au moins un nœud de traitement, transmettre le paquet de contrôle ou de données hors du port de sortie déterminé selon l'information de port de sortie dans le paquet de contrôle ou de données étiqueté.

2. Négociateur de paquets (206) selon la revendication 1, dans lequel le dispositif de réseau (218 ; 800) est un commutateur ou un routeur de type matériel.

3. Négociateur de paquets (206) selon l'une quelconque des revendications précédentes, dans lequel chaque nœud de traitement (222) est un système informatique polyvalent.

4. Négociateur de paquets (206) selon l'une quelconque des revendications précédentes, dans lequel, si le paquet de contrôle ou de données est un paquet de contrôle, le dispositif de réseau (218 ; 800) est configuré pour transférer une copie du paquet de contrôle à chaque nœud de traitement (222) dans la grappe (220).

5. Négociateur de paquets (206) selon l'une quelconque des revendications précédentes, dans lequel, si le paquet de contrôle ou de données est un paquet de données, le dispositif de réseau (218 ; 800) :
est configuré pour déterminer, au moyen d'un algorithme d'équilibrage de charge, un unique nœud de traitement dans la grappe (220) pour gérer le paquet de données ; et
est configuré pour transférer le paquet de données vers l'unique nœud de traitement,
l'unique nœud de traitement étant déterminé sur la base d'un ou plusieurs paramètres inclus dans le paquet de données.

6. Négociateur de paquets (206) selon l'une quelconque des revendications précédentes, dans lequel, si le paquet de contrôle ou de données est un paquet de contrôle, les une ou plusieurs fonctions de traitement de paquet incluent :
l'extraction d'une information du paquet de contrôle pour identifier une session de communication dans le réseau central (204) auquel le paquet de contrôle appartient,
les une ou plusieurs fonctions de traitement de paquet incluant en outre :
la détermination du port de sortie par lequel le paquet de contrôle doit être transféré ; et
la génération d'une règle de transfert dynamique pour un trafic de données qui fait partie de la même session de communication que le paquet de contrôle, la règle de transfert dynamique étant configurée pour transférer le trafic de données par le même port de sortie que le paquet de contrôle.

7. Négociateur de paquets (206) selon l'une quelconque des revendications précédentes, dans lequel, si le paquet de contrôle ou de données est un paquet de données, les une ou plusieurs fonctions de traitement de paquet incluent :
la corrélation du paquet de données avec une session de communication dans le réseau central (204) ; et
l'application, au paquet de données, d'une règle de transfert dynamique associée à la session de communication pour déterminer le port de sortie pour le paquet de données.

8. Négociateur de paquets (206) selon l'une quelconque des revendications précédentes, dans lequel, si le paquet de contrôle ou de données est un paquet de données, les une ou plusieurs fonctions de traitement de paquet incluent :
l'application au paquet de données d'une ou plusieurs stratégies de filtrage ou de transfert définies par un utilisateur.

9. Négociateur de paquets (206) selon la revendication 8, dans lequel chacune des une ou plusieurs stratégies de filtrage ou de transfert définies par l'utilisateur se voit attribuer une priorité définie par l'utilisateur, et dans lequel les une ou plusieurs stratégies de filtrage ou de transfert définies par l'utilisateur sont appliquées au paquet de données dans un ordre qui est basé sur leur priorité respective.

10. Négociateur de paquets (206) selon la revendication 8 ou 9, dans lequel les une ou plusieurs stratégies de filtrage ou de transfert incluent une stratégie basée sur une identité internationale d'abonné mobile, IMSI, un nom de point d'accès, APN, une identité internationale d'équipement mobile, IMEI, un nœud B évolué, ENodeB, une passerelle de dessert, SGW, un type de technologie d'accès radio, RAT, une localisation d'utilisateur ou un statut de chargement associé au paquet de données.

11. Négociateur de paquets (206) selon l'une quelconque des revendications précédentes, dans lequel les une ou plusieurs fonctions de traitement de paquet incluent :
dédupliquer le paquet de contrôle ou de données.

12. Négociateur de paquets (206) selon l'une quelconque des revendications précédentes, dans lequel le réseau central (204) est un réseau LTE ou 3G mobile ; et dans lequel le paquet de contrôle ou de données est un paquet GTP-C, un paquet GTP-U, un paquet Radius ou un paquet SGi.

13. Support de stockage non temporaire et lisible par ordinateur sur lequel est stocké un code de programme exécutable par un nœud de traitement dans une grappe (220) de nœuds de traitement (222), la grappe (220) de nœuds de traitement (222) étant configurée pour agir de concert avec un dispositif de réseau de type matériel (218 ; 800) comme un négociateur de paquets (206) dans un réseau de visibilité (200), le code de programme amenant le nœud de traitement à :
recevoir un paquet de contrôle ou de données en provenance du dispositif de réseau (218 ; 800), le paquet de contrôle ou de données étant répliqué depuis un réseau central (204) ;
exécuter une ou plusieurs fonctions de traitement de paquet sur le paquet de contrôle ou de données, les une ou plusieurs fonctions de traitement de paquet étant fonctionnelles pour déterminer un port de sortie du dispositif de réseau (218 ; 800) par lequel le paquet de contrôle ou de données doit être transféré vers une sonde ou un outil (208) du réseau de visibilité (200) en vue de son analyse, étiqueter le paquet de contrôle ou de données avec une information de port de sortie identifiant le port de sortie et renvoyer le paquet de contrôle ou de données étiqueté au dispositif de réseau (218 ; 800), et
le dispositif de réseau (218 ; 800) étant configuré pour, en réponse à la réception du paquet de contrôle ou de données étiqueté en provenance de l'au moins un nœud de traitement, transmettre le paquet de contrôle ou de données hors du port de sortie déterminé selon l'information de port de sortie dans le paquet de contrôle ou de données étiqueté.

14. Procédé réalisé par un nœud de traitement dans une grappe (220) de nœuds de traitement (222), la grappe (220) de nœuds de traitement (222) agissant de concert avec un dispositif de réseau de type matériel (218 ; 800) comme un négociateur de paquets (206) dans un réseau de visibilité (200), le procédé comprenant les étapes consistant à :
recevoir, par le nœud de traitement (222), un paquet de contrôle ou de données en provenance du dispositif de réseau, le paquet de contrôle ou de données étant répliqué depuis un réseau central (204) ;
exécuter une ou plusieurs fonctions de traitement de paquet sur le paquet de contrôle ou de données, les une ou plusieurs fonctions de traitement de paquet étant fonctionnelles pour déterminer un port de sortie du dispositif de réseau (218 ; 800) par lequel le paquet de contrôle ou de données doit être transféré vers une sonde ou un outil (208) du réseau de visibilité (200) en vue de son analyse, étiqueter le paquet de contrôle ou de données avec une information de port de sortie identifiant le port de sortie et renvoyer le paquet de contrôle ou de données étiqueté au dispositif de réseau (218 ; 800), et
le dispositif de réseau (218 ; 800) étant configuré pour, en réponse à la réception du paquet de contrôle ou de données étiqueté en provenance de l'au moins un nœud de traitement, transmettre le paquet de contrôle ou de données hors du port de sortie déterminé selon l'information de port de sortie dans le paquet de contrôle ou de données étiqueté.
